# FASCICULE DE BREVET EUROPEEN

(11) **EP 3 165 060 B1**
(45) Date de publication et mention de la délivrance du brevet: **12.09.2018**
(21) Numéro de dépôt: 16306379.5
(22) Date de dépôt: 20.10.2016
(51) Int. Cl.: A01B 33/10

(54) **OUTIL DE HERSE ROTATIVE AMÉLIORÉ ET HERSE COMPORTANT DE TELS OUTILS**
VERBESSERTES KREISELEGGENWERKZEUG UND EGGE, DIE SOLCHE WERKZEUGE UMFASST
IMPROVED ROTARY HARROW TOOL AND HARROW COMPRISING SUCH TOOLS

(30) Priorité: 23.10.2015 FR 1560127
(43) Date de publication de la demande: 10.05.2017
(73) Titulaire: Kuhn SA (Societe Anonyme), 67700 Saverne (FR)
(72) Inventeur: SCHOTT, Thierry, 67350 La Walck (FR); TEITGEN, Hervé, 57370 Phalsbourg (FR)
(74) Mandataire: Nuss, Laurent

(56) Documents cités:
- EP-A1- 1 346 621
- EP-A1- 2 545 757

## Description

La présente invention concerne le domaine du machinisme et des équipements agricoles, plus particulièrement les machines de travail du sol et leurs pièces constitutives, notamment les pièces d'usure.

L'invention est plus spécifiquement relative à un outil de travail du sol pour herse rotative, à une herse rotative comportant de tels outils, ainsi qu'à un procédé de fabrication de ces derniers.

Les outils de travail du sol visés dans la présente demande englobent en particulier, mais non limitativement, les outils pour des herses rotatives du type visé dans le document EP-A-0 891 688 au nom de la demanderesse. De tels outils présentent un corps avec une première partie supérieure de liaison et une seconde partie inférieure formant lame, destinée à travailler le sol.

La portion active ou de travail de cette lame s'étend depuis son extrémité inférieure libre sur une hauteur déterminée correspondant à la profondeur de travail optimale de l'outil. C'est cette portion de travail qui est apte et destinée à être engagée et déplacée dans le sol pour désagglomérer la terre et briser les mottes : elle est par conséquent soumise à une usure importante, qui affecte prioritairement la face active et bien entendu le bord et/ou l'arête frontal(e) de celle-ci, qui entre en premier en contact avec la terre lors de la mise en oeuvre de l'outil considéré.

Les outils de ces herses sont généralement montés par paire sur des rotors qui tournent alternativement selon des sens de rotation opposés, d'où il résulte une orientation particulière des outils, par conformation spécifique de leur corps, débouchant sur des outils droits et des outils gauches.

Pour augmenter la durée de vie des outils, il est connu de traiter les parties actives avec un métal d'apport par rechargement ou revêtement, comme par exemple fournir un revêtement en carbure de tungstène (cf. outil connu sous la désignation DURAKUHN - marque déposée).

Il est également connu de rapporter des éléments sous forme de plaquettes en un matériau dur et résistant à l'abrasion (par exemple du carbure métallique) au niveau des zones soumises à une usure intense, pour constituer l'arête frontale et les faces attenantes actives de la portion de travail au moins de l'outil. Ces plaquettes permettent de conserver la régularité de travail de l'outil sur une durée importante (en préservant la forme de la portion active) et d'augmenter la durée de vie des outils.

Selon une première solution connue, illustrée par exemple par le document EP 2 445 329, ces plaquettes sont montées directement sur le corps de l'outil, au niveau de sa position active. Toutefois, cette solution connue repose sur une forme complexe des plaquettes, avec notamment un nez associé à un épaulement en face arrière, et n'est pas optimisée pour une application à un outil de herse rotative.

Selon une seconde solution connue, déjà mise en oeuvre par la demanderesse, les plaquettes sont montées sur une pièce support intermédiaire qui est elle-même solidarisée avec le corps de l'outil.

Dans cette seconde solution, les plaquettes définissent une arête active anguleuse à grand angle (notamment supérieure à 90°) avec une arête centrale et deux faces actives (double biseau), qui requiert une puissance élevée lors de l'entraînement de l'outil correspondant.

Une autre solution connue est illustrée dans le document EP 2 545 757. Le but de l'invention consiste à fournir un outil de herse rotative amélioré simultanément en termes de durée de vie et de puissance consommée lors du travail de l'outil, tout en mettant en oeuvre des plaquettes de forme simple.

A cet effet, l'invention a pour objet un outil de herse rotative comprenant un corps avec une première partie supérieure de liaison et une seconde partie inférieure formant lame, ladite seconde partie présentant dans la zone de son extrémité libre ou inférieure une portion de travail apte et destinée à être engagée et déplacée dans le sol et comportant au moins un élément rapporté en forme de plaquette constituant au moins l'arête frontale et la face allongée attenante actives de la portion de travail au moins de l'outil, la ou chaque plaquette étant montée rigidement avec conjugaison de forme dans un site de réception complémentaire en creux de la portion de corps définissant la portion de travail ou d'une pièce support intermédiaire rapportée sur ou dans cette portion,
outil caractérisé en ce que la plaquette supérieure ou la région supérieure de la plaquette unique, située à l'opposé de l'extrémité libre ou inférieure de la seconde partie, présente un coin intérieur arrondi de forme convexe et en ce que la ou chaque plaquette présente une structure sensiblement plane avec, vue en coupe selon un plan perpendiculaire à l'arête et à la face actives, une épaisseur variable et décroissante depuis son bord longitudinal frontal formant l'arête active jusqu'à son bord longitudinal arrière monté dans le socle de réception, préférentiellement contre un épaulement de ce dernier, ce tout en formant par coopération avec la portion de travail et/ou la pièce support un biseau.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'une herse rotative comportant des outils conventionnels connus ;
les figures 2A et 2B sont des vues en élévation, selon deux directions mutuellement perpendiculaires, d'un outil de herse rotative selon un mode de réalisation de l'invention, dans lequel les plaquettes sont fixées sur une pièce support intermédiaire ;
la figure 3 est une vue en coupe selon A-A de l'outil représenté figure 1 ;
les figures 4 et 5 sont des vues partielles, à une autre échelle, des portions de travail d'outils respectivement à lame à droite (Figure 4) et à lame à gauche (Figure 5) selon l'invention ;
la figure 6 est une vue en perspective d'un ensemble [pièce support/plaquette] faisant partie de l'outil représenté figure 4, la plaquette étant réalisée d'un seul tenant ;
la figure 7 est une vue éclatée de la portion de travail d'outil représenté figure 4, et,
les figures 8A et 8B sont des vues similaires à celles des figures 2A et 2B respectivement, d'un autre mode de réalisation de l'invention, dans lequel les plaquettes sont fixées directement sur le corps de l'outil.

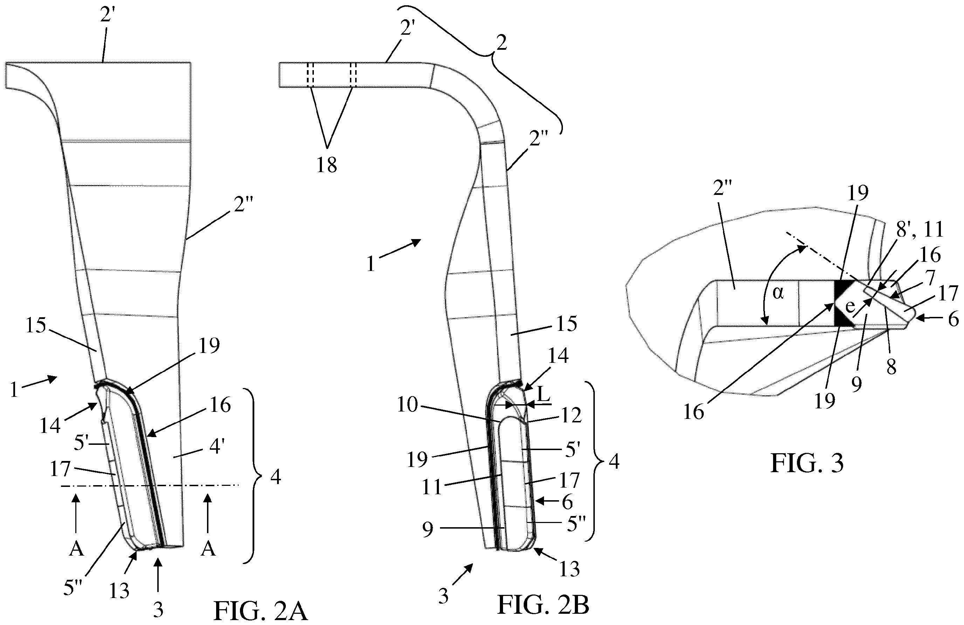

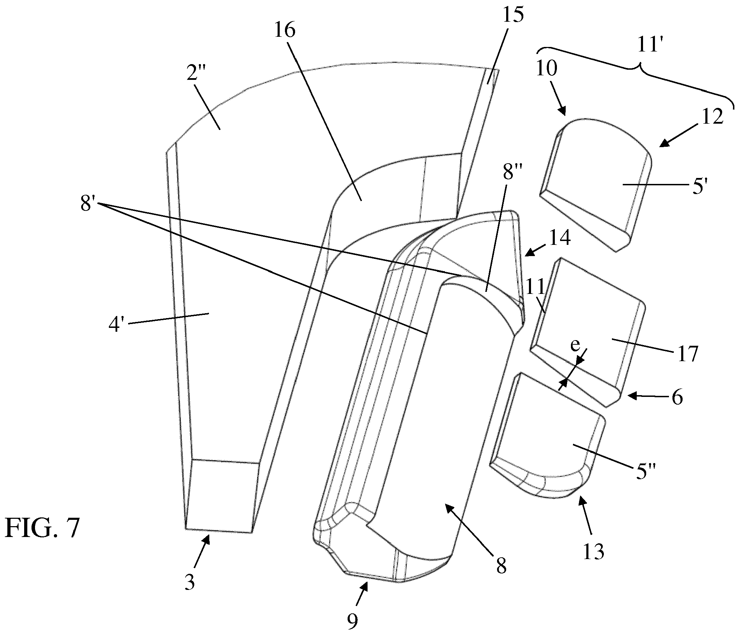

Les figures 2 à 7 montrent, pour certaines en partie seulement, un outil 1 de herse rotative comprenant un corps 2 avec une première partie 2' supérieure de liaison et une seconde partie inférieure 2" formant lame, ladite seconde partie 2" présentant dans la zone, de son extrémité libre ou inférieure 3, une portion de travail 4 apte et destinée à être engagée et déplacée dans le sol. Cette portion de travail comporte au moins un élément rapporté 5, 5', 5" (de revêtement et de protection) en forme de plaquette constituant au moins l'arête frontale 6 et la face allongée 7 attenante actives de la portion de travail 4 au moins de l'outil 1. La ou chaque plaquette 5, 5', 5" est montée rigidement avec conjugaison de forme dans un site de réception 8 complémentaire en creux, ménagé dans la portion 4' du corps 2 définissant la portion de travail 4 ou d'une pièce support intermédiaire 9 rapportée sur ou dans cette portion 4.

Conformément à l'invention, la plaquette supérieure 5' ou la région supérieure de la plaquette 5 unique, située à l'opposé de l'extrémité libre ou inférieure 3 de la seconde partie 2", présente un coin intérieur 10 arrondi de forme convexe. La ou chaque plaquette 5, 5' 5" présente une structure sensiblement plane avec, vue en coupe selon un plan perpendiculaire à l'arête 6 et à la face 7 actives, une épaisseur e variable et décroissante depuis son bord longitudinal frontal formant l'arête active 6 jusqu'à son bord longitudinal arrière 11 monté dans le site de réception 8, préférentiellement contre un épaulement 8', de ce dernier, ce tout en formant, par coopération avec la portion de travail 4 et/ou la pièce support 9, un biseau.

Ainsi, l'invention fournit un outil 1 avec une portion de travail 4 dont le renforcement contre l'usure, l'efficacité opérationnelle et la résistance aux chocs ont été notablement augmentés, ce tout en permettant de fournir une forme en biseau simple de faible ouverture angulaire (par exemple un angle au sommet α compris entre 20° et 40°, préférentiellement de l'ordre de 25° à 35°), permettant de limiter la puissance de travail nécessaire à sa mise en oeuvre (l'arête 6 étant réalisée en totalité par la ou les plaquette(s), elle peut être très étroite).

La face allongée 7 constitue une partie au moins, préférentiellement une partie majeure en termes de surface, de la face active du biseau constituant la portion de travail 4.

La portion de corps 4' de la seconde partie 2" portant directement la ou les plaquette(s) ou la pièce support 9 présente elle-même déjà une forme en biseau (en section), dont une partie de la face inclinée et l'arête sont recouverts par la ou les plaquette(s).

De plus, la prévision d'une épaisseur e décroissante permet d'optimiser le ratio [résistance à l'usure et aux chocs/quantité de matière de(s) plaquettes(s)] en renforçant prioritairement la zone la plus sollicitée (l'arête frontale 6). En outre, un amincissement depuis l'arête frontale 6 vers le bord opposé 11 de la ou des plaquettes 5, 5', 5" permet, pour un angle au sommet donné de la portion de travail 4 (angle le plus faible possible pour limiter la puissance de travail), d'une part, d'avoir une augmentation de l'épaisseur complémentaire de la pièce support 9 ou de la portion 4' de la seconde partie 2" plus importante (par rapport à une épaisseur de la ou des plaquettes qui serait constante) et, d'autre part, de limiter la hauteur de l'épaulement 8' au niveau du bord 11 (concentration de contraintes moindre / risque de rupture sous les chocs diminué).

La présence d'un coin intérieur arrondi 10 convexe coopérant avec un congé arrondi complémentaire du site de réception 8 (au niveau de l'épaulement 8') permet d'éviter une concentration des contraintes transmises par la ou les plaquettes 5, 5', 5" à la pièce support 9 et/ou à la partie inférieure découpée 4' de la seconde partie 2" du corps 2 de l'outil 1 recevant la pièce support 9 ou directement la ou les plaquettes 5, 5', 5" (et dont la hauteur correspond à la longueur de la portion de travail 4). En effet, l'imbrication mutuelle par coopération, avec contact surfacique intime, de formes arrondies conjuguées (préférentiellement sensiblement circulaires) entre la plaquette unique 5 ou la plaquette supérieure 5' et l'épaulement 8' du site 8, au niveau de ce coin 10, permet d'aboutir à une bonne répartition des contraintes au niveau de toute la surface de l'interface correspondante.

En particulier, les contraintes transmises selon le plan des plaquettes 5, 5', 5" depuis l'arête frontale 6 et le coin inférieur extérieur 13 ne sont pas concentrés dans une zone angulaire, mais réparties sur une surface courbe. Comme le montre en particulier la figure 3, la ou les plaquette(s) est(sont) noyée(s) dans l'épaisseur de la pièce 9 ou de la partie 4', en étant affleurante(s) et continue(s) au niveau de la surface extérieure, constituant ensemble la face active de l'outil 1.

Les différentes dispositions techniques de l'invention mentionnées ci-dessus permettent également la mise en oeuvre de plaquettes 5, 5', 5" de forme simple, sans nez, ni décrochement, ni formation de montages spécifiques, en particulier saillante (conservation d'une section sensiblement rectangulaire sur toute l'étendue des plaquettes).

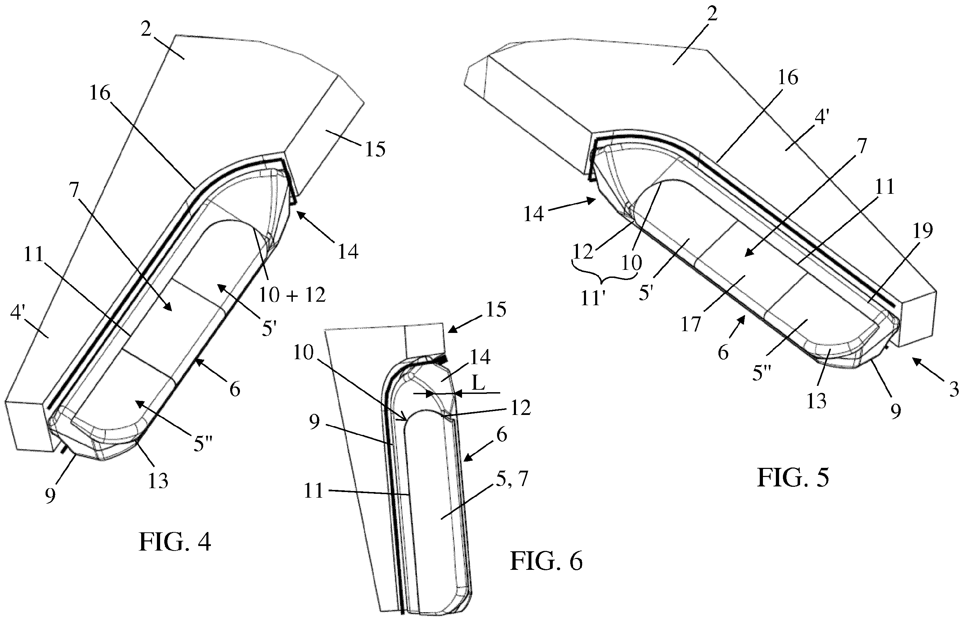

En accord avec un mode de réalisation préféré de l'invention, illustré aux figures 4 à 7, la plaquette unique d'un seul tenant 5, ou la plaquette composite constituée par plusieurs plaquettes 5', 5", présente une forme sensiblement rectangulaire. Les deux cotés longitudinaux opposés de cette forme rectangulaire correspondent respectivement à l'arête active 6 et au bord longitudinal arrière 11, le coin arrondi convexe 10 étant situé entre ledit bord longitudinal arrière 11 et le bord transversal supérieur 11' de ladite plaquette 5 ou plaquette composite 5', 5", en se prolongeant préférentiellement en tant que portion bombée dudit bord transversal supérieur 11'.

Comme le montrent également les figures précitées, le coin intérieur arrondi convexe 10 débouche sur la face active 7 de la portion de travail 4.

Préférentiellement, la plaquette unique 5 ou la plaquette composite constituée de plusieurs plaquettes 5', 5" présente une constitution générale plane et plate, d'épaisseur (e) variable. En outre, la portion de travail 4, ou le cas échéant la pièce support intermédiaire 9, se présente sensiblement sous la forme d'un prisme à section triangulaire et le site de réception 8 est ménagé dans un flanc latéral dudit prisme, la surface de contact entre ce site 8 et la plaquette unique 5 ou composite 5', 5" étant, en dehors de l'épaulement, plane et plate.

Ainsi, compte tenu de la forme avantageuse de la ou des plaquette(s) 5, 5', 5", et de leur positionnement particulier sur la portion 4 ou la pièce 9, l'essentiel des contraintes et forces s'exerçant sur l'arête frontale 6 et sur la face active 7 est transmise par l'interface de contact surfacique au niveau du site de réception 8, directement dans la partie massive du corps de ladite portion 4 ou de ladite pièce 9. En outre, aucune formation particulière n'est nécessaire au niveau des plaquettes 5, 5', 5" pour leur montage calé sur la portion 4 ou la pièce 9.

En accord avec une caractéristique avantageuse de l'invention, ressortant notamment des figures 4 à 7, la plaquette supérieure 5'ou la région supérieure de la plaquette unique 5, située à l'opposé de l'extrémité libre ou inférieure 3 de la seconde partie 2", présente un coin extérieur 12 arrondi (débouchant sur l'arête frontale 6), le bord transversal supérieur 11' de ladite plaquette 5' ou région de plaquette 5 précitée présentant ainsi, par association contigüe des coins intérieurs 10 et extérieur 12, une forme arrondie convexe sur toute sa largeur (bord supérieur 11' courbe ou arrondi), avec éventuellement deux rayons de courbures différents, entre l'arête frontale 6 et le bord longitudinal arrière 11. Par ailleurs, l'épaulement 8' du site de réception 8 présente un congé 8" de forme complémentaire arrondie concave, dans sa région coopérant avec ledit bord transversal supérieur 11'.

Une telle disposition fournit un sommet au niveau du coin 12 sensiblement aplati, avec un angle nettement supérieur à un angle droit et qui se raccorde de manière continue avec l'arête frontale active 6 : il en résulte une résistance aux chocs et aux impacts nettement améliorée (par rapport à un coin angulaire). La prévision d'un arrondi continu au niveau du bord transversal supérieur permet non seulement d'aboutir à un ancrage optimisé dans le site 8, mais également d'augmenter la surface d'appui au niveau de l'interface 5, 5' / 8, 8' dans cette région de l'outil 1.

En accord avec une autre caractéristique avantageuse de l'invention, il peut être prévu que la plaquette inférieure 5" ou la région inférieure de la plaquette unique 5, située au niveau de l'extrémité libre ou inférieure 3 de la seconde partie 2", comporte un coin inférieur extérieur 13 arrondi, s'étendant à partir de l'arête frontale 6.

En créant une liaison et un raccord continus au niveau de ce coin 13, entre l'arête frontale 6 et le bord inférieur de la plaquette unique 5 ou de la plaquette inférieure 5", par la prévision d'une conformation arrondie, il est possible d'augmenter considérablement la résistance aux chocs de cette région (par rapport à un sommet vif ou angulaire) qui est la plus exposée de l'outil 1 en phase de travail.

Préférentiellement, les bords arrondis des coins extérieurs supérieur 12 et inférieur 13, se raccordent de manière continue et lisse avec l'arête frontale active 6.

Bien entendu, la pièce support 9 ou la portion 4' de la partie 2" présente dans la zone de leur site 8, coïncidant avec ce coin arrondi inférieur 13, une forme arrondie extérieure similaire.

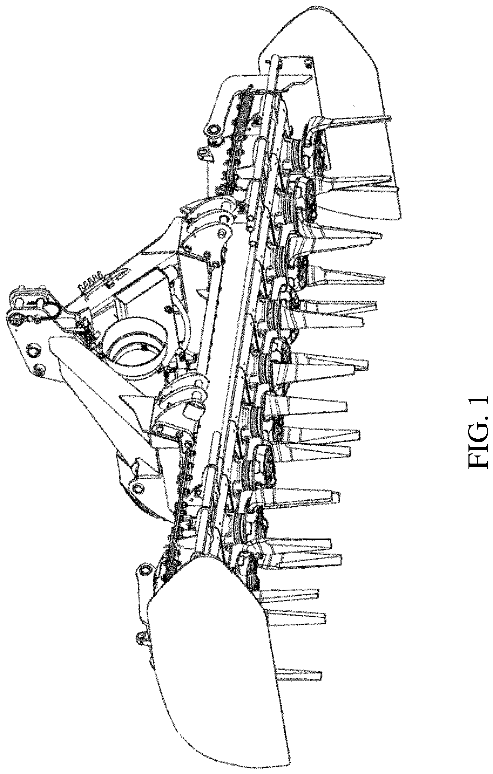

En particulier lorsque la seconde partie 2" du corps 2 de l'outil 1 est légèrement vrillée (voir figures 1 à 3), de telle manière que l'arête active soit légèrement inclinée vers l'intérieur du cercle décrit par l'outil en phase de travail, on peut prévoir, comme le montre la figure 3, que l'arête 6 soit proéminente par rapport à la portion de travail 4 et/ou à la pièce support 9, dans la direction de déplacement de la seconde partie 2" en phase de travail de l'outil 1, et présente en section transversale une forme extérieure arrondie.

On remarque sur la figure 3 que, du fait de la caractéristique précitée, l'épaisseur de matière maximale de la ou des plaques 5, 5', 5" se situe sous l'arête 6, d'où il résulte une protection optimisée de la portion de travail 4.

De plus, la forme en pointe arrondie, saillante dans la direction de déplacement de la portion de travail 4, de l'arête 6 (figure 3) assure une couverture protectrice de l'arête frontale sous-jacente de la pièce 9 ou de la portion 4' sans nécessiter de rebord (en conservant une forme de plaquette plane) et réalise une répartition des contraintes sur tout le site de réception 8. Ladite arête 6 se trouve ainsi décalée du côté de la face active de la portion de travail 4 formée par la face 7 de la ou des plaquettes 5, 5', 5" et la face contiguë de la pièce 9 de la portion 4'.

On aboutit ainsi, comme le montre la figure 3, à une forme générale en biseau au niveau de la portion de travail 4 (vue en coupe) avec une pointe proéminente du côté de la face active inclinée dudit biseau.

Selon une autre caractéristique avantageuse de l'invention, et comme le montrent les figures 2, 4 à 6 et 8B, la portion de travail 4 de la seconde partie 2" du corps 2 de l'outil 1 ou la pièce support intermédiaire 9 recevant la ou les plaquette(s) 5, 5', 5 présente, dans une zone 14 attenante à la plaquette supérieure 5' ou à la région supérieure de la plaquette unique 5, une largeur de section L progressivement croissante, de l'arête active 6 (ou de l'arête du biseau de la portion 4) vers le bord ou l'arête frontal(e) 15 de la portion de la seconde partie 2" s'étendant au-dessus de la portion de travail 4.

La prévision d'un tel changement de section progressif d'une partie plus large 9, 15 vers une partie plus étroite 6 permet, en évitant tout changement brutal de section, de s'affranchir de toute zone de concentration de contraintes qui fragiliserait l'outil 1.

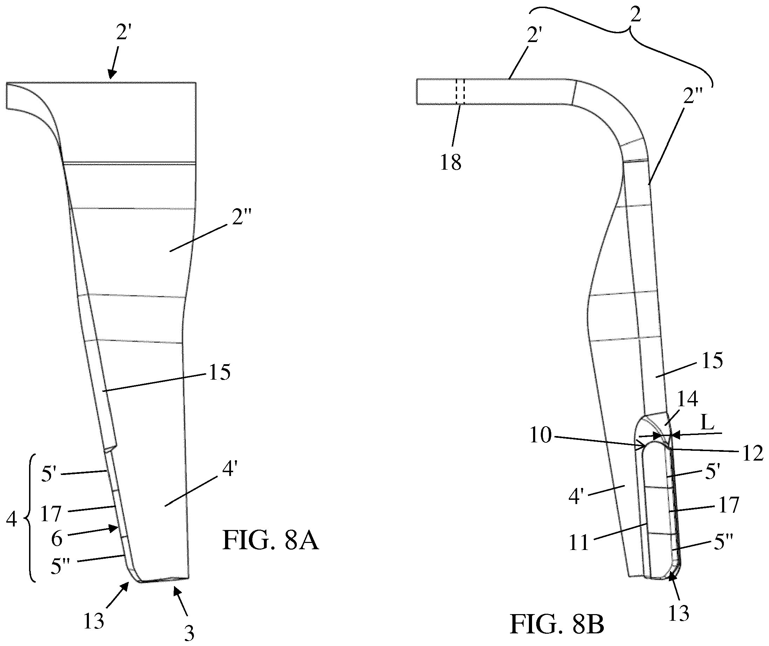

Conformément à un premier mode de réalisation, représenté sur les figures 8A et 8B, la ou chaque plaquette 5, 5', 5" est montée dans un site de réception 8formée directement dans la seconde partie 2"du corps 2de l'outil 1 et est solidarisée à cette partie 2"par brasage.

Conformément à un second mode de réalisation, ressortant des figures 2 à 7, la ou chaque plaquette 5, 5', 5" est montée dans un site de réception 8 d'une pièce support intermédiaire 9, cette dernière étant elle-même montée dans une découpe ou un site de logement 16 ménagé(e) dans la seconde partie 2" du corps 2 de l'outil 1, ou formant en totalité la portion de travail 4, la ou chaque plaquette 5, 5', 5" étant solidarisée à la pièce support 9 par brasage et ladite pièce support 9 étant elle-même solidarisée à ladite seconde partie 2" par soudure.

La mise en oeuvre d'une pièce support 9 permet de conserver une forme standard pour le corps 2 et sa portion 4', tout en faisant évoluer la forme de la portion de travail 4, de la pièce 9, du site 8 et de la ou des plaquettes 5, 5', 5".

En accord avec une première variante constructive pratique, illustrée par la figure 6, l'outil 1 peut comporter une unique plaquette 5 formant l'arête 6 et la face 7 actives de la portion de travail 4 de la seconde partie 2" du corps 2 de l'outil 1 (ou au moins la majorité de la surface de cette face attenante à l'arête), cette plaquette 5 comportant avantageusement une extrémité supérieure arrondie sur toute sa largeur et une extrémité inférieure arrondie au niveau de son coin 13 frontal.

En accord avec une seconde variante constructive pratique, illustrée sur les figures 2 à 5 et 7, l'outil 1 comporte au moins deux plaquettes 5' et 5" élémentaires distinctes formant ensemble une plaquette composite fournissant l'arête 6 et la face 7 actives de la portion de travail 4 de la seconde partie 2" du corps 2 de l'outil 1 (ou au moins la majorité de la surface de cette face attenante à l'arête 6), à savoir au moins une plaquette supérieure 5' avec une extrémité supérieure arrondie 10, 12 (formant le bord 11') et au moins une plaquette inférieure 5" avec une extrémité inférieure arrondie au niveau de son coin frontal extérieur 13, ainsi qu'éventuellement au moins une plaquette intermédiaire 17 disposée de manière attenante et jointive entre lesdites plaquettes supérieure 5' et inférieure 5".

L'invention a également pour objet une herse rotative, par exemple du type représenté figure 1, comprenant des rotors rotatifs porte-outils, comportant chacun préférentiellement une paire d'outils opposés, herse caractérisée en ce que chaque outil consiste en un outil 1 tel que décrit précédemment.

Enfin, l'invention concerne également un procédé de fabrication d'un outil 1 du type décrit précédemment, qui peut être décliné selon deux variantes en fonction de la présence ou non d'une pièce support intermédiaire 9.

Ainsi selon une première variante, le procédé peut consister à fournir par découpe une plaque métallique allongée, à réaliser un cambrage à chaud de ladite plaque pour obtenir un corps 2 en forme de L avec une première partie de liaison 2' et une seconde partie 2" formant lame, à ménager un ou des orifices 18 de fixation dans la première partie 2', à usiner le site 8 de réception d'une ou de plusieurs plaquettes 5, 5', 5", à monter dans le site 8 précité et à solidariser par brasage ladite ou lesdites plaquette(s) 5, 5', 5", par exemple en carbure de tungstène, et, enfin, à réaliser des opérations de chauffe, de trempe et de revenu de l'outil composite 1 résultant des opérations précédentes.

Selon une seconde variante, le procédé peut consister à fournir par découpe une plaque métallique allongée, à réaliser un cambrage à chaud de ladite plaque pour obtenir un corps 2 en forme de L avec une première partie de liaison 2' et une seconde partie 2" formant lame, à ménager des orifices 18 de fixation dans la première partie 2', à fournir une pièce support intermédiaire 9, puis à monter et à solidariser par brasage sur la pièce support 9 précitée une ou plusieurs plaquettes 5, 5', 5", par exemple en carbure de tungstène, à monter et à solidariser par soudage la pièce support 9 portant la ou les plaquettes 5, 5', 5" dans un site de logement 16 obtenu préalablement dans l'opération de découpe et, enfin, à réaliser des opérations de chauffe, de trempe et de revenu de l'outil composite 1 résultant des opérations précédentes.

L'opération de trempe finale garantit une dureté homogène de l'ensemble de l'outil 1 (corps 2 + pièce 9) et une tenue à l'usure élevée.

Chaque outil 1 peut, en outre, être décliné comme outil droit au gauche.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Outil (1) de herse rotative comprenant un corps (2) avec une première partie supérieure de liaison (2') et une seconde partie inférieure (2") formant lame, ladite seconde partie (2") présentant dans la zone de son extrémité libre ou inférieure (3) une portion de travail (4) apte et destinée à être engagée et déplacée dans le sol et comportant au moins un élément rapporté en forme de plaquette (5, 5', 5") constituant au moins l'arête frontale (6) et la face allongée attenante (7) actives de la portion de travail (4) au moins de l'outil (1), la ou chaque plaquette (5, 5', 5") étant montée rigidement avec conjugaison de forme dans un site de réception complémentaire (8) en creux de la portion du corps (2) définissant la portion de travail (4) ou d'une pièce support intermédiaire (9) rapportée sur ou dans cette portion (4),
outil (1) **caractérisé en ce que** la plaquette supérieure (5') ou la région supérieure de la plaquette (5) unique, située à l'opposé de l'extrémité libre ou inférieure (3) de la seconde partie (2"), présente un coin intérieur (10) arrondi de forme convexe et **en ce que** la ou chaque plaquette (5, 5' 5") présente une structure sensiblement plane avec, vue en coupe selon un plan perpendiculaire à l'arête (6) et à la face (7) actives, une épaisseur (e) variable et décroissante depuis son bord longitudinal frontal formant l'arête active (6) jusqu'à son bord longitudinal arrière (11) monté dans le site de réception (8), préférentiellement contre un épaulement (8') de ce dernier, ce en formant, par coopération avec la portion de travail (4) et/ou la pièce support (9), un biseau.

2. Outil selon la revendication 1, **caractérisé en ce que** la plaquette unique d'un seul tenant (5), ou la plaquette composite constituée par plusieurs plaquettes (5', 5"), présente une forme sensiblement rectangulaire et **en ce que** les deux cotés longitudinaux opposés de cette forme rectangulaire correspondent respectivement à l'arête active (6) et au bord longitudinal arrière (11), le coin arrondi convexe (10) étant situé entre ledit bord longitudinal arrière (11) et le bord transversal supérieur (11') de ladite plaquette (5) ou plaquette composite (5', 5"), en se prolongeant préférentiellement en tant que portion bombée dudit bord transversal supérieur (11').

3. Outil selon l'une quelconque des revendications 1 et 2, **caractérisé en ce que** le coin intérieur arrondi convexe (10) débouche sur la face active (7) de la portion de travail (4).

4. Outil selon l'une quelconque des revendications 1 à 3, **caractérisé en ce que** la plaquette unique (5) ou la plaquette composite constituée de plusieurs plaquettes (5', 5") présente une constitution générale plane et plate, d'épaisseur (e) variable, **en ce que** la portion de travail (4), ou le cas échéant la pièce support intermédiaire (9), se présente sensiblement sous la forme d'un prisme à section triangulaire et **en ce que** le site de réception (8) est ménagé dans un flanc latéral dudit prisme, la surface de contact entre ce site (8) et la plaquette unique (5) ou composite (5', 5") étant, en dehors de l'épaulement, plane et plate.

5. Outil selon l'une quelconque des revendications 1 à 4, **caractérisé en ce que** la plaquette supérieure (5') ou la région supérieure de la plaquette unique (5), située à l'opposé de l'extrémité libre ou inférieure (3) de la seconde partie (2"), présente un coin extérieur (12) arrondi, le bord transversal supérieur (11') de ladite plaquette (5') ou région de plaquette (5) précitée présentant ainsi, par association contigüe des coins intérieurs (10) et extérieur (12), une forme arrondie convexe sur toute sa largeur, avec éventuellement deux rayons de courbures différents qui s'étend, entre l'arête frontale (6) et le bord longitudinal arrière (11) et **en ce que** l'épaulement (8') du site de réception (8) présente un congé (8") de forme complémentaire arrondie concave, dans sa région coopérant avec ledit bord transversal supérieur (11').

6. Outil selon l'une quelconque des revendications 1 à 5, **caractérisé en ce que** la plaquette inférieure (5") ou la région inférieure de la plaquette unique (5), située au niveau de l'extrémité libre ou inférieure (3) de la seconde partie (2"), comporte un coin inférieur extérieur (13) arrondi, s'étendant à partir de l'arête frontale (6).

7. Outil selon les revendications 5 et 6, **caractérisé en ce que** les bords arrondis des coins extérieurs supérieur (12) et inférieur (13), se raccordent de manière continue et lisse avec l'arête frontale active (6).

8. Outil selon l'une quelconque des revendications 1 à 7, **caractérisé en ce que** l'arête frontale active (6) est proéminente par rapport à la portion de travail (4) et/ou à la pièce support (9), dans la direction de déplacement de la seconde partie (2") en phase de travail de l'outil (1), et présente en section transversale une forme extérieure arrondie.

9. Outil selon l'une quelconque des revendication 1 à 8, **caractérisé en ce que** la portion de travail (4) de la seconde partie (2") du corps (2) de l'outil (1) ou la pièce support intermédiaire (9) recevant la ou les plaquette(s) (5, 5', 5") présente, dans une zone (14) attenante à la plaquette supérieure (5') ou à la région supérieure de la plaquette unique (5), une largeur de section (L) progressivement croissante, de l'arête active (6) vers le bord ou l'arête frontal(e) (15) de la portion de la seconde partie (2") s'étendant au-dessus de la portion de travail (4).

10. Outil selon l'une quelconque des revendications 1 à 9, **caractérisé en ce que** la ou chaque plaquette (5, 5', 5") est montée dans un site de réception (8) formée directement dans la seconde partie (2") du corps (2) de l'outil (1) et est solidarisée à cette partie (2") par brasage.

11. Outil selon l'une quelconque des revendications 1 à 9, **caractérisé en ce que** la ou chaque plaquette (5, 5', 5") est montée dans un site de réception (8) d'une pièce support intermédiaire (9), cette dernière étant elle-même montée dans une découpe ou un site de logement (16) ménagé(e) dans la seconde partie (2") du corps (2) de l'outil (1), ou formant en totalité la portion de travail (4), la ou chaque plaquette (5, 5', 5") étant solidarisée à la pièce support (9) par brasage et ladite pièce support (9) étant elle-même solidarisée à ladite seconde partie (2") par soudure.

12. Outil selon l'une quelconque des revendications 1 à 11, **caractérisé en ce qu'**il comporte une unique plaquette (5) formant l'arête (6) et la face (7) actives de la portion de travail (4) de la seconde partie (2") du corps (2) de l'outil (1), cette plaquette (5) comportant avantageusement une extrémité supérieure arrondie sur toute sa largeur et une extrémité inférieure arrondie au niveau de son coin (13) frontal.

13. Outil selon l'une quelconque des revendications 1 à 12, **caractérisé en ce qu'**il comporte au moins deux plaquettes (5' et 5") élémentaires distinctes formant ensemble une plaquette composite fournissant l'arête (6) et la face (7) actives de la portion de travail (4) de la seconde partie (2") du corps (2) de l'outil (1), à savoir au moins une plaquette supérieure (5') avec une extrémité supérieure arrondie (10, 12) et au moins une plaquette inférieure (5") avec une extrémité inférieure arrondie au niveau de son coin frontal extérieur (13), ainsi qu'éventuellement au moins une plaquette intermédiaire (17) disposée de manière attenante et jointive entre lesdites plaquettes supérieure (5') et inférieure (5").

14. Herse rotative comprenant des rotors rotatifs porte-outils, comportant chacun préférentiellement une paire d'outils opposés, herse **caractérisée en ce que** chaque outil consiste en un outil (1) selon l'une quelconque des revendications 1 à 13.

15. Procédé de fabrication d'un outil selon l'une quelconque des revendications 1 à 10, 12 et 13, **caractérisé en ce qu'**il consiste à fournir par découpe une plaque métallique allongée, à réaliser un cambrage à chaud de ladite plaque pour obtenir un corps (2) en forme de L avec une première partie de liaison (2') et une seconde partie (2") formant lame, à ménager un ou des orifices (18) de fixation dans la première partie (2'), à usiner le site (8) de réception d'une ou de plusieurs plaquettes (5, 5', 5"), à monter dans le site (8) précité et à solidariser par brasage ladite ou lesdites plaquette(s) (5, 5', 5"), par exemple en carbure de tungstène et, enfin, à réaliser des opérations de chauffe, de trempe et de revenu de l'outil composite (1) résultant des opérations précédentes.

16. Procédé de fabrication d'un outil selon l'une quelconque des revendications 1 à 9 et 11 à 13, **caractérisé en ce qu'**il consiste à fournir par découpe une plaque métallique allongée, à réaliser un cambrage à chaud de ladite plaque pour obtenir un corps (2) en forme de L avec une première partie de liaison (2') et une seconde partie (2") formant lame, à ménager des orifices (18) de fixation dans la première partie (2'), à fournir une pièce support intermédiaire (9), puis à monter et à solidariser par brasage sur la pièce support (9) précitée une ou plusieurs plaquettes (5, 5', 5"), par exemple en carbure de tungstène, à monter et à solidariser par soudage la pièce support (9) portant la ou les plaquettes (5, 5', 5") dans un site de logement (16) obtenu préalablement dans l'opération de découpe et, enfin, à réaliser des opérations de chauffe, de trempe et de revenu de l'outil composite (1) résultant des opérations précédentes.

## Patentansprüche

1. Kreiseleggenwerkzeug (1), das einen Körper (2) mit einem ersten oberen Verbindungsteil (2') und einem, eine Schneide bildenden, zweiten unteren Teil (2") beinhaltet, wobei der zweite Teil (2") in der Gegend seines freien oder unteren Endes (3) einen Arbeitsabschnitt (4) aufweist, der dazu geeignet und bestimmt ist, im Boden in Eingriff genommen und bewegt zu werden, und der mindestens ein angefügtes Element in Form einer Platte (5, 5', 5") umfasst, die mindestens die aktive vordere Kante (6) und die aktive angrenzende längliche Fläche (7) des Arbeitsabschnitts (4) mindestens des Werkzeugs (1) darstellt, wobei die Platte oder jede Platte (5, 5', 5") formschlüssig an einer komplementären Aufnahmestelle (8) starr montiert ist, zwischen in dem Abschnitt des Körpers (2), der den Arbeitsabschnitt (4) definiert, oder einem Zwischenstützteil (9), das auf oder in diesen Abschnitt (4) angefügt ist,
wobei das Werkzeug (1) **dadurch gekennzeichnet ist, dass** die obere Platte (5') oder der obere Bereich der einzelnen Platte (5), die oder der sich gegenüber dem freien oder unteren Ende (3) des zweiten Teils (2") befindet, eine abgerundete Innenecke (10) konvexer Form aufweist und dass die oder jede Platte (5, 5', 5") eine im Wesentlichen ebene Struktur aufweist mit, im Schnitt gemäß einer Ebene senkrecht zur aktiven Kante (6) und zur aktiven Fläche (7) gesehen, einer variablen Dicke (e) und die von ihrem vorderen Längsrand, der die aktive Kante (6) bildet, hin zu ihrem hinteren Längsrand (11), der in der Aufnahmestelle (8) montiert ist, vorzugsweise an einer Schulter (8') derselben, wobei dabei im Zusammenspiel mit dem Arbeitsabschnitt (4) und/oder dem Stützteil (9) eine Schrägkante gebildet wird, abnimmt.

2. Werkzeug nach Anspruch 1, **dadurch gekennzeichnet, dass** die einzelne einstückige Platte (5) oder die zusammengesetzte Platte, die aus mehreren Platten (5', 5") besteht, eine im Wesentlichen rechteckige Form aufweist und dass die zwei gegenüberliegenden Längsseiten dieser rechteckigen Form der aktiven Kante (6) bzw. dem hinteren Längsrand (11) entsprechen, wobei die abgerundete konvexe Ecke (10) sich zwischen dem hinteren Längsrand (11) und dem oberen Querrand (11') der Platte (5) oder der zusammengesetzten Platte (5', 5") befindet und sich vorzugsweise als gewölbter Abschnitt des oberen Querrands (11') erstreckt.

3. Werkzeug nach einem der Ansprüche 1 und 2, **dadurch gekennzeichnet, dass** die abgerundete konvexe Innenecke (10) auf der aktiven Fläche (7) des Arbeitsabschnitts (4) ausläuft.

4. Werkzeug nach einem der Ansprüche 1 bis 3, **dadurch gekennzeichnet, dass** die einzelne Platte (5) oder die zusammengesetzte Platte, die aus mehreren Platten (5', 5") besteht, einen allgemein ebenen und flachen Aufbau variabler Dicke (e) aufweist, so dass der Arbeitsabschnitt (4) oder gegebenenfalls das Zwischenstützteil (9) im Wesentlichen in Form eines Prismas mit dreieckigem Querschnitt vorliegt und dass die Aufnahmestelle (8) in einer seitlichen Flanke des Prismas vorgesehen ist, wobei die Kontaktfläche zwischen dieser Stelle (8) und der einzelnen (5) oder zusammengesetzten (5', 5") Platte abgesehen von der Schulter eben und flach ist.

5. Werkzeug nach einem der Ansprüche 1 bis 4, **dadurch gekennzeichnet, dass** die obere Platte (5') oder der obere Bereich der einzelnen Platte (5), die oder der sich gegenüber dem freien oder unteren Ende (3) des zweiten Teils (2") befindet, eine abgerundete Außenecke (12) aufweist, wobei der obere Querrand (11') der Platte (5') oder des vorgenannten Bereichs der Platte (5) auf diese Weise durch benachbarte Verbindung der Innenecke (10) und der Außenecke (12) auf seiner ganzen Breite eine konvexe abgerundete Form mit eventuell zwei unterschiedlichen Krümmungsradien aufweist, die sich zwischen der vorderen Kante (6) und dem hinteren Längsrand (11) erstrecken, und dass die Schulter (8') der Aufnahmestelle (8) in ihrem mit dem oberen Querrand (11') zusammenwirkenden Bereich eine Kehle (8") komplementärer konkaver abgerundeter Form aufweist.

6. Werkzeug nach einem der Ansprüche 1 bis 5, **dadurch gekennzeichnet, dass** die untere Platte (5") oder der untere Bereich der einzelnen Platte (5), die oder der sich auf Höhe des freien oder unteren Endes (3) des zweiten Teils (2") befindet, eine abgerundete untere Außenecke (13) umfasst, die sich von der vorderen Kante (6) erstreckt.

7. Werkzeug nach den Ansprüchen 5 und 6, **dadurch gekennzeichnet, dass** der abgerundete Rand der oberen (12) und der unteren (13) Außenecke sich auf kontinuierliche und glatte Weise an die aktive vordere Kante (6) anschließt.

8. Werkzeug nach einem der Ansprüche 1 bis 7, **dadurch gekennzeichnet, dass** die aktive vordere Kante (6) relativ zum Arbeitsabschnitt (4) und/oder Stützteil (9) in der Arbeitsphase des Werkzeugs (1) in die Richtung der Verlagerung des zweiten Teils (2") hervorsteht und im Querschnitt eine abgerundete äußere Form aufweist.

9. Werkzeug nach einem der Ansprüche 1 bis 8, **dadurch gekennzeichnet, dass** der Arbeitsabschnitt (4) des zweiten Teils (2") des Körpers (2) des Werkzeugs (1) oder das Zwischenstützteil (9), der oder das die Platte(n) (5, 5', 5") aufnimmt, in einer an die obere Platte (5') oder an den oberen Bereich der einzelnen Platte (5) angrenzenden Gegend (14) eine Querschnittsbreite (L) aufweist, die von der aktiven Kante (6) zum/zur vorderen Rand oder Kante (15) des sich über dem Arbeitsabschnitt (4) erstreckenden Abschnitts des zweiten Teils (2") allmählich zunimmt.

10. Werkzeug nach einem der Ansprüche 1 bis 9, **dadurch gekennzeichnet, dass** die oder jede Platte (5, 5', 5") in einer Aufnahmestelle (8) montiert ist, die direkt im zweiten Teil (2") des Körpers (2) des Werkzeugs (1) gebildet ist und mit diesem Teil (2") durch Löten fest verbunden ist.

11. Werkzeug nach einem der Ansprüche 1 bis 9, **dadurch gekennzeichnet, dass** die oder jede Platte (5, 5', 5") in einer Aufnahmestelle (8) eines Zwischenstützteils (9) montiert ist, wobei Letzteres selbst in einer Aussparung oder einer Sitzstelle (16) montiert ist, die im zweiten Teil (2") des Körpers (2) des Werkzeugs (1) vorgesehen ist, oder in seiner Gesamtheit den Arbeitsabschnitt (4) bildet, wobei die oder jede Platte (5, 5', 5") mit dem Stützteil (9) durch Löten fest verbunden ist und das Stützteil (9) selbst mit dem zweiten Teil (2") durch Schweißen fest verbunden ist.

12. Werkzeug nach einem der Ansprüche 1 bis 11, **dadurch gekennzeichnet, dass** es eine einzelne Platte (5) umfasst, die die aktive Kante (6) und die aktive Fläche (7) des Arbeitsabschnitts (4) des zweiten Teils (2") des Körpers (2) des Werkzeugs (1) bildet, wobei diese Platte (5) vorteilhafterweise ein über seine ganze Breite abgerundetes oberes Ende und ein auf Höhe seiner vorderen Ecke (13) abgerundetes unteres Ende umfasst.

13. Werkzeug nach einem der Ansprüche 1 bis 12, **dadurch gekennzeichnet, dass** es mindestens zwei separate elementare Platten (5' und 5") umfasst, die zusammen eine zusammengesetzte Platte bilden, die die aktive Kante (6) und die aktive Fläche (7) des Arbeitsabschnitts (4) des zweiten Teils (2") des Körpers (2) des Werkzeugs (1) bereitstellen, nämlich mindestens eine obere Platte (5') mit einem abgerundeten oberen Ende (10, 12) und mindestens eine untere Platte (5") mit einem auf Höhe ihrer vorderen Außenecke (13) abgerundeten unteren Ende sowie eventuell mindestens eine Zwischenplatte (17), die auf angrenzende und anliegende Weise zwischen der oberen (5') und der unteren (5") Platte angeordnet ist.

14. Kreiselegge, die drehbare Werkzeughalterrotoren beinhaltet, von denen jeder vorzugsweise ein Paar gegenüberliegender Werkzeuge umfasst, wobei die Egge **dadurch gekennzeichnet ist, dass** jedes Werkzeug aus einem Werkzeug (1) nach einem der Ansprüche 1 bis 13 besteht.

15. Herstellungsverfahren für ein Werkzeug nach einem der Ansprüche 1 bis 10, 12 und 13, **dadurch gekennzeichnet, dass** es darin besteht, durch Zuschneiden eine längliche metallische Platte bereitzustellen, unter Wärme ein Biegen der Platte durchzuführen, um einen Körper (2) in L-Form mit einem ersten Verbindungsteil (2') und einem eine Schneide bildenden zweiten Teil (2") zu erlangen, eine oder mehrere Befestigungsöffnungen (18) im ersten Teil (2') vorzusehen, die Aufnahmestelle (8) einer oder mehrerer Platten (5, 5', 5") zu bearbeiten, in der vorgenannten Stelle (8) die Platte(n) (5, 5', 5"), beispielsweise aus Wolframcarbid, zu montieren und durch Löten fest zu verbinden und schließlich Arbeitsschritte zum Erwärmen, Härten und Anlassen des aus den vorherigen Arbeitsschritten entstandenen zusammengesetzten Werkzeugs (1) durchzuführen.

16. Herstellungsverfahren eines Werkzeugs nach einem der Ansprüche 1 bis 9 und 11 bis 13, **dadurch gekennzeichnet, dass** es darin besteht, durch Zuschnitt eine längliche metallische Platte bereitzustellen, unter Wärme ein Biegen der Platte durchzuführen, um einen Körper (2) in L-Form mit einem ersten Verbindungsteil (2') und einem eine Schneide bildenden zweiten Teil (2") zu erlangen, Befestigungsöffnungen (18) im ersten Teil (2') vorzusehen, ein Zwischenstützteil (9) bereitzustellen, dann eine oder mehrere Platten (5, 5', 5"), beispielsweise aus Wolframcarbid, am vorgenannten Stützteil (9) zu montieren und durch Löten fest zu verbinden, das Stützteil (9), das die Platte(n) (5, 5', 5") trägt, in einer zuvor im Zuschnittarbeitsschritt geschaffenen Sitzstelle (16) zu montieren und durch Schweißen fest zu verbinden und schließlich Arbeitsschritte zum Erwärmen, Härten und Anlassen des aus den vorherigen Arbeitsschritten entstandenen zusammengesetzten Werkzeugs (1) durchzuführen.

## Claims

1. Rotary harrow tool (1) comprising a body (2) having a first upper connecting part (2') and a second lower blade-forming part (2"), said second part (2") having, in the area of its free or lower end (3), a work portion (4) capable of being and designed to be engaged and displaced in the ground and comprising at least one attached element in the form of a plate (5, 5', 5") constituting at least the working front edge (6) and the adjoining elongated working face (7) of the working portion (4) at least of the tool (1), the or each plate (5, 5', 5") being mounted rigidly with form-fitting in a complementary hollow receiving site (8) of the portion of the body (2) defining the work portion (4) or of an intermediate support component (9) attached to or in this portion (4),
which tool (1) is **characterised in that** the upper plate (5') or the upper region of the single plate (5), situated opposite the free or lower end (3) of the second part (2"), has a rounded inside corner (10) of convex shape and **in that** the or each plate (5, 5', 5") has a substantially planar structure with, seen in cross-section through a plane perpendicular to the working edge (6) and to the working face (7), a variable thickness (e) decreasing from its front longitudinal edge forming the working edge (6), to its rear longitudinal edge (11) mounted in the receiving site (8), preferably against a shoulder (8') of the latter, while forming a bevelled edge by cooperation with the work portion (4) and/or the support component (9).

2. Tool according to claim 1, **characterised in that** the single plate (5) in one piece, or the composite plate consisting of a plurality of plates (5', 5"), has a substantially rectangular shape and **in that** the two opposite longitudinal sides of this rectangular shape correspond to the working edge (6) and to the rear longitudinal edge (11) respectively, the convex rounded corner (10) being situated between said rear longitudinal edge (11) and the upper transverse edge (11') of said plate (5) or composite plate (5', 5"), preferably being extended as a domed portion of said transverse edge (11').

3. Tool according to any one of claims 1 and 2, **characterised in that** the convex rounded inside corner (10) opens out at the working face (7) of the work portion (4).

4. Tool according to any one of claims 1 to 3, **characterised in that** the single plate (5) or the composite plate consisting of a plurality of plates (5', 5") has a planar and flat general constitution, of variable thickness (e), **in that** the work portion (4) or, if occasion arises, the intermediate support component (9) is substantially in the form of a prism of triangular cross-section, and **in that** the receiving site (8) is arranged in a lateral flank of said prism, the contact surface between this site (8) and the single plate (5) or composite plate (5', 5") being, apart from the shoulder, planar and flat.

5. Tool according to any one of claims 1 to 4, **characterised in that** the upper plate (5') or the upper region of the single plate (5), situated opposite the free or lower end (3) of the second part (2"), has a rounded outside corner (12), the upper transverse edge (11') of said plate (5') or region of the aforementioned plate (5) thus having, due to the inside corner (10) and outside corner (12) being adjacent, a convex rounded shape over its whole width, with possibly two different radii of curvature, which extends between the front edge (6) and the rear longitudinal edge (11), and **in that** the shoulder (8') of the receiving site (8) has a groove (8") of complementary concave rounded shape, in its region cooperating with said upper transverse edge (11').

6. Tool according to any one of claims 1 to 5, **characterised in that** the lower plate (5") or the lower region of the single plate (5), situated at the level of the free or lower end (3) of the second part (2"), comprises a rounded outside lower corner (13), extending from the front edge (6).

7. Tool according to claims 5 and 6, **characterised in that** the rounded edges of the upper (12) and lower (13) outside corners are smoothly and continuously connected to the working front edge (6).

8. Tool according to any one of claims 1 to 7, **characterised in that** the working front edge (6) protrudes relative to the work portion (4) and/or the support component (9), in the direction of travel of the second part (2") in the work phase of the tool (1), and in cross-section has a rounded outer shape.

9. Tool according to any one of claims 1 to 8, **characterised in that** the work portion (4) of the second part (2") of the body (2) of the tool (1) or the intermediate support component (9) receiving the plate or plates (5, 5', 5") has, in a zone (14) adjoining the upper plate (5') or the upper region of the single plate (5), a width of progressively increasing cross-section (L), of the working edge (6) towards the front edge (15) of the portion of the second part (2") extending above the work portion (4).

10. Tool according to any one of claims 1 to 9, **characterised in that** the or each plate (5, 5', 5") is mounted in a receiving site (8) formed directly in the second part (2") of the body (2) of the tool (1) and is rigidly joined to this part (2") by brazing.

11. Tool according to any one of claims 1 to 9, **characterised in that** the or each plate (5, 5', 5") is mounted in a receiving site (8) of an intermediate support component (9), the latter being itself mounted in a cut-out portion or housing site (16) arranged in the second part (2") of the body (2) of the tool (1), or forming the work portion (4) completely, the or each plate (5, 5', 5") being rigidly joined to the support component (9) by brazing, and said support component (9) being itself rigidly joined to said second part (2") by welding.

12. Tool according to any one of claims 1 to 11, **characterised in that** it comprises a single plate (5) forming the working edge (6) and the working face (7) of the work portion (4) of the second part (2") of the body (2) of the tool (1), this plate (5) advantageously comprising a rounded upper end over its whole width and a rounded lower end at the level of its front corner (13).

13. Tool according to any one of claims 1 to 12, **characterised in that** it comprises at least two separate basic plates (5' and 5") together forming a composite plate providing the working edge (6) and the working face (7) of the work portion (4) of the second part (2") of the body (2) of the tool (1), namely at least one upper plate (5') with a rounded upper end (10, 12) and at least one lower plate (5") with a rounded lower end at the level of its front outside corner (13), as well as possibly at least one intermediate plate (17) disposed in an adjacent and tightly fitting manner between said upper (5') and lower (5") plates.

14. Rotary harrow comprising rotary tool-carrying rotors, each preferably comprising a pair of opposed tools, which harrow is **characterised in that** each tool consists of a tool (1) according to any one of claims 1 to 13.

15. Method for the manufacture of a tool according to any one of claims 1 to 10, 12 and 13, **characterised in that** it consists of providing an elongated metal plate by cutting, hot-forming a bend of said plate to obtain an L-shaped body (2) with a first connecting part (2') and a second blade-forming part (2"), arranging one or more fixing orifices (18) in the first part (2'), machining the receiving site (8) of one or more plates (5, 5', 5"), mounting said plate or plates (5, 5', 5"), for example made of tungsten carbide, in the aforementioned site (8) and rigidly joining them by brazing, and lastly performing heating, quench hardening and annealing operations on the composite tool (1) resulting from the above operations.

16. Method for the manufacture of a tool according to any one of claims 1 to 9 and 11 to 13, **characterised in that** it consists of providing an elongated metal plate by cutting, hot-forming a bend of said plate to obtain an L-shaped body (2) with a first connecting part (2') and a second blade-forming part (2"), arranging fixing orifices (18) in the first part (2'), providing an intermediate support component (9), then mounting and rigidly joining by brazing one or more plates (5, 5', 5"), for example made of tungsten carbide, on the aforementioned support component (9), mounting and rigidly joining by soldering the support component (9) carrying the plate or plates (5, 5', 5") in a housing site (16) obtained beforehand in the cutting operation, and lastly performing heating, quench hardening and annealing operations on the composite tool (1) resulting from the above operations.
